# EUROPÄISCHE PATENTSCHRIFT

(11) **EP 0 515 892 B1**
(45) Veröffentlichungstag und Bekanntmachung des Hinweises auf die Patenterteilung: **05.07.1995**
(21) Anmeldenummer: 92107949.7
(22) Anmeldetag: 12.05.1992
(51) Int. Cl.: C04B 35/52, C04B 35/536

(54) **Verfahren zur Herstellung von Formkörpern aus Blähgraphit**
Process for producing mouldings from expanded graphite
Procédé pour la préparation de corps moulés en graphite expansé

(30) Priorität: 25.05.1991 DE 4117077
(43) Veröffentlichungstag der Anmeldung: 02.12.1992
(73) Patentinhaber: BAYER AG, 51368 Leverkusen (DE)
(72) Erfinder: Von Bonin, Wulf, Dr., W-5068 Odenthal-Hahnenberg (DE); von Gizycki, Ulrich, Dr., W-5090 Leverkusen 3 (DE)

(56) Entgegenhaltungen:
- EP-A- 0 445 400
- EP-A- 0 458 150
- DE-A- 2 430 720
- DE-A- 4 007 060
- FR-A- 2 424 240
- US-A- 4 244 934
- PATENT ABSTRACTS OF JAPAN vol. 5, no. 31 (C-45)(703) 25. Februar 1981 & JP-A-55 158 115 (NITTO BOSEKI KK) 9. Dezember 1980

## Beschreibung

Die vorliegende Erfindung betrifft eine besonders vorteilhafte Herstellung von Formkörpern aus Blähgraphiten.

Es ist bekannt, Formkörper mit geringen Raumgewichten herzustellen, indem man Blähgraphit in geschlossene Formen einbringt und in diesen auf Temperaturen über 180°C erhitzt.

Dabei expandiert der Blähgraphit und füllt die Form aus. Dieses Verfahren hat jedoch den Nachteil, daß der in schuppiger Form vorliegende Blähgraphit in komplizierteren Formen nur schwierig längere Expansionswege zurücklegen kann. Das hat zur Folge, daß die Formen bei der Expansion nur unvollständig ausgefüllt werden, die entstehenden Formteile an verschiedenen Stellen stark unterschiedliche Raumgewichte aufweisen und die Wände der Formen unterschiedlichen Drucken ausgesetzt werden, was zu Deformierungen der Form Anlaß geben kann.

Es wurde nun ein Verfahren zur Herstellung von Formkörpern aus Blähgraphit gefunden, das dadurch gekennzeichnet ist, daß man Blähgraphit mit einer Flüssigkeit versetzt und die so erhaltene feuchte Zubereitungsform des Blähgraphits in Formen auf Temperaturen über 180°C erhitzt, wobei die einzusetzende Flüssigkeitsmenge so gewählt wird, daß der Blähgraphit nicht mehr staubt und nicht mehr uneingeschränkt rieselfähig ist und der gesamte Ansatz die Flüssigkeit ohne Ablauferscheinungen in sich behält.

Als Blähgraphit für die vorliegende Erfindung kommen Graphite jeglichen Typs in Frage, die beim Erhitzen blähfähig sind. Sie können massiv, gequollen oder auch schon teilexpandiert sein und z.B. um 10 bis 800 Volumenprozent und darüber expandieren. Solche Blähgraphite (z.B. sogenannte Graphitsäuren und Graphitsalze) sind bekannt. Es handelt sich dabei im allgemeinen um Graphite, in deren Zwischengitterebenen Fremdatome, Ionen oder Molekülgruppen eingelagert sind. Bevorzugt sind sogenannte NOₓ-und SOₓ -Blähgraphite, die durch Einwirkung von Schwefel-oder Salpetersäure auf Graphit herstellbar sind, gegebenenfalls in Gegenwart eines Oxidationsmittels (z.B. H₂O₂). Auch auf elektro-chemischem Weg können gegebenenfalls geeignete Blähgraphite erhalten werden.

Die Blähgraphite können als solche, in (teil-)neutralisierter Form und/oder zusammen mit Hilfsstoffen eingesetzt werden. Bei den Hilfsstoffen kann es sich z.B. um Oxidationsstabilisatoren (wie Phosphate, Borate, Phosphorsäuren, Borsäuren, deren Ester und deren Amide), pH-Wert-Stellmittel (etwa Basen oder Basenspender) und/oder Bindemittel handeln. Als Bindemittel kommen z.B. lösliche Metallphosphate, Metallphosphonate und Metallphosphonatvorläufer in Frage, wie sie in der DE-OS 39 12 552 beschrieben sind, aber auch Ammonium- und Aminsalze, vorzugsweise (Poly-)Alkylenpolyaminsalze und Alkanolaminsalze (z.B. Ethanolaminsalze) von Phosphorsäuren (z.B. H₃PO₄), Borsäuren oder von sauren Phosphaten von Metallen der 2. und 3. Gruppe des Periodensystems der Elemente und die weiter unten beschriebenen Zuschlagstoffe, soweit sie Bindemitteleigenschaften haben.

Die Blähgraphite können in kompakter Form eingesetzt werden. Vorzugsweise sind sie jedoch vorexpandiert, d.h. durch Erhitzen auf Temperaturen unter 600° C, vorzugsweise auf 180 bis 400° C, bereits zu einem Teil ihres Blähvermögens, aber nicht vollständig, expandiert worden.

Die Blähgraphite können beispielsweise mittlere größte Korndurchmesser von 0,05 bis 15mm, vorzugsweise von 0,5 bis 5 mm, aufweisen.

Die Blähgraphite können auch im Gemisch mit anderen, expansionsfähigen oder nicht expansionsfähigen Zuschlagstoffen eingesetzt werden. Zuschlagstoffe können z.B. sein:
Perlite, Vermikulite, blähfähige Gläser, Glimmer, Tone, Borsilikate, Kokse, Holzkohlen, Steinkohlen, Braunkohlen, Graphitgranulate, Korkgranulate, Holzgranulate, Getreidekörner, Kork, Rindengranulate, Blähton, Schaumbeton, Metallschwamm, Bims, Tuff und/oder Lava.

Bei der erfindungsgemäß herzustellenden feuchten Zubereitungsform des Blähgraphits können gegebenenfalls Füll- und Verstärkungsstoffe zugefügt werden, die sich dann besonders gleichmäßig verteilen.

Bei den Füll- und Verstärkungsstoffen, die gegebenenfalls auch Zuschlagstoffe sein können, kann es sich beispielsweise um Fasern, Kristallite, Blättchen, Hanteln, Kugeln, Hohlkugeln, Pulver und/oder Granulate der verschiedensten Art handeln, beispielsweise um Metallpulver, Metallspäne, Metallfäden, Gesteinsmehle, Gläser, Emaillfritten, Kreide, Dolomit, Kaolin, Quarz, Oxyde und Hydroxyde des Calciums, Magnesiums, Aluminiums und Eisens, Phosphate, Silikate, Aluminate, Zemente, Gipse, Schlacken, Flugaschen, Kohlen, Kokse, Cellulose, Knochen-, Holz-, Rinden-, Früchte-, Fruchtschalen-, Heu- und Stroh-Zerkleinerungsprodukte und Fruchtkörper von Mais, Hirse und Getreide der verschiedensten Art.

Zusätze können im Gemisch mit Blähgraphit insgesamt z.B. in Mengen von 0 bis 85 Gew.-%, vorzugsweise von 15 bis 60 Gew.-%, vorliegen. Dabei sind auch alle denkbaren Kombinationen von 2 oder mehr dieser Stoffe aus einer Kategorie und alle denkbaren Kombinationen von 2 oder mehr dieser Stoffe aus verschiedenen Kategorien möglich.

Bevorzugt wird die erfindungsgemäß herzustellende feuchte Zubereitungsform des Blähgraphits aus Blähgraphit und Wasser oder aus Blähgraphit und wäßrigen Lösungen oder Dispersionen von Phosphaten, Polyphosphaten und/oder Boraten von Metallen, Aminen und/oder Ammoniak, Oxiden, Hydroxiden, Carboxylaten, Silikaten von Magnesium, Calcium, Aluminium, Zink, Eisen, Natrium und/oder Kalium, Kohlen, Koksen, bituminösen Produkten der Kohle- und/oder Erdölveredelung, Kohlehydraten, Polymeren, Proteinen, Verdickern und/oder Tensiden hergestellt.

Es ist ein wesentliches Merkmal der vorliegenden Erfindung, daß man den Blähgraphit mit einer Flüssigkeit versetzt und so eine feuchte Zubereitungsform des Blähgraphits erhält. Als Flüssigkeiten zur Herstellung der feuchten Zubereitungsform des Blähgraphits kommen bevorzugt Wasser oder Wasser enthaltende flüssige Gemische in Frage. Wasser enthaltende flüssige Gemische können z.B. wäßrige Lösungen, Emulsionen, Dispersionen oder Aufschlämmungen sein. Solche Gemische können außer Wasser z.B. enthalten: organische Lösungsmittel wie Ketone, Alkohole und Amine und/oder Ester und Amide organischer und anorganischer Säuren, und/oder organische und/oder anorganische Salze, wie Salze der verschiedenen Schwefel- und Phosphorsäuren, Borate, Silikate, Aluminate, Formiate, Maleate, Acetate, Citrate und Oleate und/oder nichtionische, kationische und anionische Monomere, Oligomere und Polymere, wie Kohlehydrate (z.B. Melassen, Zucker, Stärken, Cellulosen und deren Abkömmlinge), Kohlenwasserstoffe und deren Abkömmlinge (z.B. Teer, Bitumen, Fette und Wachse), Glykole, Polyole, Polyether, Polyester, natürliche und synthetische Polyamide, Proteine, Kaseine, Chitine, natürliche und synthetische Kautschuke oder andere Elastomere, Homo- und Copolymerisate ungesättigter Kohlenwasserstoffverbindungen (z.B. an sich bekannte Polymer- und Kunststoffdispersionen), Polyurethane, Phenolharze, Furanharze, Harnstoffharze, Melamin-Formaldehyd-Harze, Epoxydharze, ungesättigte Polyesterharze, Polysulfidharze und/ oder Polyimidharze.

Zur Herstellung der feuchten Zubereitungsform des Blähgraphits verwendbare Wasser enthaltende Gemische können auch mehrere der angegebenen Materialien enthalten. Besonders bevorzugt sind Gemische, die eine gewisse klebende und verdickende Wirkung zeigen, z.B. wäßrige Gemische, die Melassen, Cellulosederivate, Stärke, Polyvinylacetathydrolysate, Acrylamidpolymerisate oder Bitumen enthalten.

Soweit Wasser enthaltende Gemische zur Herstellung der feuchten Zubereitungsform des Blähgraphits verwendet werden, ist darauf zu achten, daß solche Gemische vor dem Zusammenbringen mit Blähgraphit Flüssigkeitscharakter aufweisen. Das heißt: mit Wasser mischbare flüssige Stoffe können in beliebiger Menge vorhanden sein, mit Wasser nicht oder wenig mischbare flüssige Stoffe werden vorzugsweise in Wasser emulgiert, in Wasser lösliche feste Stoffe werden vorzugsweise maximal in Mengen entsprechend ihrer Löslichkeit eingesetzt und in Wasser nicht oder wenig lösliche feste Stoffe werden vorzugsweise als Dispersion oder feinteilige Anschlämmung in Wasser eingesetzt.

Bevorzugt wird die feuchte Zubereitungsform des Blähgraphits mit Wasser oder Wasser enthaltenden Gemischen hergestellt, die z.B. nicht weniger als 2 Gew.-% Wasser enthalten. Solche Wasser enthaltenden Gemische enthalten besonders bevorzugt 20 bis 99,5 Gew.-% Wasser.

Es können ein oder mehrere verschiedene solcher Gemische zum Einsatz kommen.

Erfindungsgemäß wird der Blähgraphit in eine feuchte Zubereitungsform überführt. Das geschieht, wie schon dargelegt, durch Zusatz einer Flüssigkeit. Die Menge der Flüssigkeit kann fallweise sehr verschieden sein. Sie kann z.B. je nach Korngröße und Expansionsgrad des anzufeuchtenden Blähgraphits und der Art der mitverwendeten Materialien variieren. Erfindungsgemäß wird im Einzelfall die einzusetzende Flüssigkeitsmenge so gewählt, daß einerseits der Blähgraphit, gegebenenfalls sein Gemisch mit Hilfsstoffen, Bindemitteln, Zuschlagsstoffen, Füllstoffen und/oder Verstärkungsstoffen nicht mehr staubt und nicht mehr uneingeschränkt rieselfähig ist und andererseits der gesamte Ansatz die Flüssigkeit ohne Ablauferscheinungen in sich behält. Bei der feuchten Zubereitungsform des Blähgraphits handelt es sich vorzugsweise um eine Paste oder ein Feuchtgranulat.

Die feuchte Zubereitungsform des Blähgraphits wird vorzugsweise so in eine Form zur Herstellung von Formteilen eingebracht, oder, falls sie bereits in der Form zubereitet wurde, darin so verteilt, daß in allen Teilen der Form ausreichend Blähgraphit vorhanden ist, um die Form nach der Expansion überall auszufüllen und eine einigermaßen gleichmäßige Dichteverteilung im fertigen Formkörper zu ergeben. Die feuchte Zubereitungsform des Blähgraphits haftet im allgemeinen ausreichend fest an der Form, so daß vor dem Expansionsprozess im allgemeinen keine nennenswerten Verteilungsänderungen, insbesondere kein Zusammenrieseln mehr an der tiefsten Stelle der Form, stattfinden, auch wenn die Form im wesentlichen senkrecht ausgerichtet ist oder vor dem Expansionsprozess noch bewegt wird.

Zweckmäßigerweise wurden geschlossene Formen verwendet, die jedoch das Entweichen von Gasen ermöglichen.

Als Material für die Form zur Erhitzung des Blähgraphits hat sich Stahl bewährt. Es sind hierfür aber auch andere Materialien geeignet, insbesondere andere Metalle sowie Glas. Keramik und Kunststoffe. Letztere sind bevorzugt, wenn die Erhitzung mit Mikrowellen vorgenommen werden soll.

Es ist im allgemeinen zweckmäßig, die Formenwände mit Trennmitteln zu versehen, z.B. mit Talkum, Graphit, Stärkelösungen, Aluminium- oder Kupferfolien, Papier, Baumwollgeweben oder Zellwollvliesen.

Die Erhitzung selbst kann z.B. durch Strahlung, induktiv, durch Wechselspannung, durch Heizflüssigkeiten oder Heizgase, z.B. in einem Ofen erfolgen, in den die Form eingestellt wird, die die feuchte Zubereitungsform des Blähgraphits enthält.

Die Erhitzung zur Expansion des vorzugsweise noch feuchten Blähgraphits erfolgt auf Temperaturen über 180° C. Normalerweise erfolgt die Erhitzung auf Temperaturen von nicht mehr als 900° C, vorzugsweise auf Temperaturen von nicht mehr als 800° C. Im allgemeinen kann man mit Expansionstemperaturen zwischen 200 und 800° C gute Ergebnisse erzielen. Die bevorzugt einzusetzenden SOₓ-und NOₓ-Blähgraphite haben bei 600° C im allgemeinen ihr Expansionsmaximum erreicht. Wenn man Formteile herstellen will, die als solche noch expansionsfähig sind, ist es vorteilhaft, bei Temperaturen von unter 400° C zu expandieren.

Die so erhältlichen Formteile haben Raumgewichte von beispielsweise 0,01 bis 0,6 g/cm³, vorzugsweise von 0,05 bis 0,45 g/cm³. Das Raumgewicht kann durch entsprechende Füllung der Form variiert werden.

Die erfindungsgemäß herstellbaren Formkörper aus expandiertem Blähgraphit oder diesen enthaltenden Mischungen können dort Verwendung finden, wo leichtes Gewicht mit hoher Temperaturstabilität, guter elektrischer Leitfähigkeit, guter elektromagnetischer Abschirmung, vorteilhaftem Brandverhalten und/oder mechanischer Stabilität zu kombinieren ist. Als Beispiele seien genannt: Fahrzeugbau, Flugzeugbau, Raketenbau, Möbelbau, Behälterbau, (vorbeugender) Brandschutz, Vorrichtungen für moderate Strom- und/oder Wärmeableitung, -zuleitung und -übertragung, Vorrichtungen für Wärmeisolation und Schalldämpfung, der Bau von Heizungsanlagen und Wärmeaustauschervorrichtungen, der Bau von chemikalienresistenten Anlagen und stoßabsorbierenden Vorrichtungen und der Bau von Vorrichtungen für die Reflexion und/oder Absorption elektromagnetischer Wellen.

Das erfindungsgemäße Verfahren weist eine Reihe von Vorteilen auf. Es gestattet die Herstellung von Formteilen aus Blähgraphit und Blähgraphit enthaltenden Mischungen, ohne daß die Blähgraphit-Teilchen weite Expansionswege zurücklegen müssen. Auch bei komplizierten Formen kann erreicht werden, daß diese vor und/oder nach dem Expansionsprozeß vollständig gefüllt sind. Die Raumgewichtsverteilung der so hergestellten Formkörper und damit die Isotropie der Eigenschaften dieser Formkörper ist gegenüber Formkörpern, die nach konventionellen Methoden hergestellt wurden, stark verbessert. Das erfindungsgemäße Verfahren gestattet auch, eine Vielzahl beliebiger Zusatzstoffe relativ gleichmäßig in dem zu expandierenden Gemisch zu verteilen. Da man die feuchte Zubereitungsform des Blähgraphits haftend auf die Flächen der Form aufbringen kann, rieselt der Blähgraphit nicht weg.

### Beispiele

Im folgenden wird die Erfindung beispielhaft dargestellt. Die angegebenen Teile und Prozente beziehen sich auf das Gewicht, sofern nichts anderes vermerkt ist.

Als Blähgraphit wurde in den Beispielen ein handelsüblicher SOₓ-Blähgraphit verwendet, der einen mittleren größten Korndurchmesser von 2,5 mm, eine Blähfähigkeit von mehr als 500 Vol.-% und einen Schwefelgehalt von 2,9 Gew.-% und ein Schüttgewicht von 700 g/l aufwies.

### Beispiel 1

Aus 8 mm-Stahlblech wurde eine Form für eine Rohrhalbschale mit einer Wanddicke von 1 cm und einer Länge von 50 cm hergestellt, die ein Füllvolumen von 1.000 ml besaß` Diese Form wurde mit Aluminiumfolie ausgekleidet und 100 g Blähgraphit gleichmäßig längs der mittigen Mantellinie des waagerecht liegenden Halbzylinders verteilt. Dann wurde die Form geschlossen, im vorgeheizten Ofen in waagerechter Lage auf 600° C erhitzt, danach abkühlen gelassen und die Form geöffnet. Bei dem so hergestellten Formkörper zeigte sich, daß der expandierende Blähgraphit von der Mantellinie aus stellenweise nicht bis zu den seitlichen Enden der Rohrhalbschale aufgestiegen war. In den Randbereichen entlang der beiden Außenlinien der Halbschale wies der Formkörper, soweit dorthin überhaupt Blähgraphit gelangt war, eine Raumgewicht von nur 0,01 bis 0,07 g/cm³ auf, während längs der zentralen mittigen Mantellinie das Raumgewicht über 0,25 g/cm³ betrug.

Der Versuch wurde wiederholt, wobei jedoch der Blähgraphit zuvor mit 50 ml einer 5 gew.-%igen wäßrigen Stärkelösung angeteigt wurde. Nach dem Öffnen der Form Zeigte sich, daß die Halbschalenform komplett ausgefüllt war. An den Außenlinien des Formteils betrug das Raumgewicht nunmehr 0,05 bis 0,1 g/cm³, während längs der zentralen Mittellinie das Raumgewicht 0,16 g/cm³ nicht mehr überstieg.

Das zeigt, daß bei der erfindungsgemäßen Arbeitsweise eine wesentlich verbesserte Gleichmäßigkeit der Raumgewichtsverteilung im Formkörper erreicht wird.

### Beispiel 2

Das Abgasrohr einer Wärmekraftmaschine weist 3,5 cm Durchmesser auf und ist aus konstruktiven Gründen wellig gebogen. Es wurde im Abstand von 1,8 cm mit einer in Längsrichtung zweigeteilten Schale aus 0,2 mm starkem Stahlblech umgeben. Der so entstandene wellige Zwischenraum sollte auf einer Strecke von ca. 60 cm Länge ausgefüllt werden.

Hierzu wurde der eingangs erwähnte Blähgraphit verwendet, der durch Erhitzen auf 250° C vorexpandiert worden war und nunmehr ein Schüttgewicht von 100 g/l aufwies. Der sehr leichte und staubende Blähgraphit ließ sich technisch einfach nicht ausfüllend in den Zwischenraum einbringen. Er wurde deshalb mit 70 % einer 25 %igen neutralen Ethanolaminphosphat-Lösung in Wasser versetzt, der einige Tropfen eines handelsüblichen Haushalttensids beigemengt worden waren und mit den Zusätzen schonend vermengt. Es wurde eine teigartige Masse erhalten, die in die beiden Hälften der Schale gleichmäßig eingefüllt wurde. Dann wurden die gefüllten Teilschalen ohne Materialverluste und ohne Handhabungsschwierigkeiten um das wellige Abgasrohr gelegt und so zusammengefügt, daß die Nahtstelle zwischen den Halbschalen und die Kragenstelle zwischen umgebender Schale und Abgasrohr den Austritt von Dämpfen und Gasen gestatteten. Anschließend wurde die so vorbereitete Konstruktion in einen auf 600° C vorgeheizten Ofen eingebracht und nach Erreichen dieser Temperatur wieder dem Ofen entnommen und abkühlen gelassen.

Nach Abnehmen der Stahlblechschalen zeigte es sich, daß das behandelte Teil mit Graphitexpandat schlüssig und formstabil umgeben war. Das Graphitexpandat lag fest an und stellte einen selbsttragenden Isolationskörper dar. Dieser hatte eine Wärmeleitfähigkeit von 7 W/K·m und wies schalldämpfende Eigenschaften auf.

### Beispiel 3

In einem Kneter wurden 500 Teile Blähgraphit mit 186 Teilen einer 80 %igen wäßrigen Lösung des Umsetzungsproduktes aus 1 Mol Aluminiumhydroxyd mit 3 Mol Phosphorsäure vermischt. Dann wurden 60 Teile Ethanolamin unter Kneten hinzugefügt, wobei unter Erwärmung eine Neutralisationsreaktion stattfand. Das erhaltene feuchte Produkt wurde in einer Schlagmühle auf einen Korndurchmesser von 0,5 bis 2 mm zerkleinert. Es wurde so ein Feuchtgranulat aus beschichtetem Blähgraphit erhalten, wobei die Beschichtung aus dem gebildeten Aminphosphat bestand. Das Feuchtgranulat wies einen Wassergehalt von 5,5 % auf und besaß ein Verhältnis von Blähgraphit zu Phosphat von 70 : 30 Teilen.

100 g dieses Granulats wurden in eine 1 l fassende, mit Aluminiumfolie ausgekleidete stählerne Plattenform gegeben und zu einer 2 cm dicken Platte verarbeitet, indem man die Form in waagerechter Lage in einen Ofen stellte und auf 600° C erhitzte Nach dem Abkühlen wurde entformt, die Aluminiumfolie abgezogen und das Gesamtraumgewicht der Platte zu 0,09 g/cm³ bestimmt. Dann wurde die Platte in der Mitte zersägt, so daß zwei halb so dicke Platten entstanden und an diesen beiden Platten das Raumgewicht bestimmt. Auch dieses betrug (bei beiden Platten) 0,09 g/cm³.

Zum Vergleich wurde ein analoger Versuch durchgeführt, jedoch mit dem Unterschied, daß anstelle des feuchten Granulats nur trockener Blähgraphit eingesetzt wurde. Die Raumgewichte der beiden Plattenhälften unterschieden sich in diesem Fall um 0,02 g/cm³, d. h. um rund 20 %.

### Beispiel 4

In einem langsam gerührten Gefäß wurde das gemäß Beispiel 3 erhaltene Granulat auf ca. 216° C erhitzt, wobei eine Vorexpansion eintrat, die unterbrochen wurde, als das Granulat ein Schüttgewicht von 100 g/l erreicht hatte. 100 Teile dieses vorexpandierten Granulats wurden mit 20 Teilen Eisenoxyd-Schwarzpigment und 20 Teilen Dolomitpulver gemischt und anschließend mit 50 Teilen Wasser angeteigt. Man erhielt eine nicht rieselnde und nicht staubende Masse, die problemlos zwischen zwei 100 g/cm²-Zellwollvliesen verteilt wurde und so einen sogenannten Sandwich ergab. Dieser Sandwich war flexibel, ohne Materialverlust handhabbar und wurde zwischen zwei induktiv beheizten Metallplatten bei 550° C zu einer formstabilen Platte durch Restexpansion verfestigt.

### Beispiel 5

100 Teile eines auf ein Schüttgewicht von 50 g/l vorexpandierten Blähgraphits wurden mit 200 Teilen einer 15 %igen Lösung aus handelsüblichem Natronwasserglas vermengt und in eine 2 l fassende Plattenform zur Herstellung von 2 cm dicken Platten, die mit Natronkraftpapier ausgekleidet war, eingebracht. Die geschlossene Form wurde in einen Ofen eingestellt und dort auf 600° C erhitzt. Nach dem Abkühlen wurde eine formstabile Platte erhalten, die ein Raumgewicht von 0,065 g/cm³ aufwies.

Der Versuch wurde wiederholt, wobei jedoch die Natronwasserglaslösung einmal durch eine 30 %ige Ammonphosphatlösung und einmal durch eine 30 %ige kationische Bitumenemulsion ersetzt wurde. Auch in diesen beiden Fällen wurden formstabile Platten mit Raumgewichten um ca. 0,06 g/cm³ erhalten. Solche Platten sind für Isolationszwecke und zur Abschirmung gegen elektromagnetische Felder einsetzbar.

## Patentansprüche

1. Verfahren zur Herstellung von Formkörpern aus Blähgraphit, dadurch gekennzeichnet, daß man Blähgraphit mit einer Flüssigkeit versetzt und die so erhaltene feuchte Zubereitungsform des Blähgraphits in Formen auf Temperaturen über 180°C erhitzt, wobei die einzusetzende Flüssigkeitsmenge so gewählt wird, daß der Blähgraphit nicht mehr staubt und nicht mehr uneingeschränkt rieselfähig ist und der gesamte Ansatz die Flüssigkeit ohne Ablauferscheinungen in sich behält.

2. Verfahren nach Anspruch 1, dadurch gekennzeichnet, daß es sich bei dem eingesetzten Blähgraphit um NOₓ - und/oder SOₓ-Blähgraphite handelt, die gegebenenfalls vorexpandiert sind.

3. Verfahren nach Ansprüchen 1 und 2, dadurch gekennzeichnet, daß die Blähgraphite zusammen mit Oxidationsstabilisatoren, pH-Wert-Stellmitteln und/oder Bindemitteln eingesetzt werden.

4. Verfahren nach Ansprüchen 1 bis 3, dadurch gekennzeichnet, daß die Blähgraphite im Gemisch mit Perliten, Vermikuliten, blähfähigen Gläsern, Glimmern, Tonen, Borsilikaten, Koksen, Holzkohlen, Steinkohlen, Braunkohlen, Graphitgranulaten, Korkgranulaten, Holzgranulaten, Getreidekörnern, Kork, Rindengranulaten, Blähton, Schaumbeton, Metallschwamm, Bims, Tuff und/oder Lava eingesetzt werden.

5. Verfahren nach Ansprüchen 1 bis 4, dadurch gekennzeichnet, daß Blähgraphite im Gemisch mit Zusätzen eingesetzt werden, wobei die Zusätze 0 bis 85 Gew.-%, bezogen auf das Gemisch, betragen.

6. Verfahren nach Ansprüchen 1 bis 5, dadurch gekennzeichnet, daß die feuchte Zubereitungsform des Blähgraphits aus Blähgraphit und Wasser oder aus Blähgraphit und wäßrigen Lösungen oder Dispersionen von Phosphaten, Polyphosphaten und/oder Boraten von Metallen, Aminen und/oder Ammoniak, Oxiden, Hydroxiden, Carboxylaten, Silikaten von Magnesium, Calcium, Aluminium, Zink, Eisen, Natrium und/oder Kalium, Kohlen, Koksen, bituminösen Produkten der Kohle- und/oder Erdölveredelung, Kohlehydraten, Proteinen, Verdickern und/oder Tensiden hergestellt wurde.

7. Verfahren nach Ansprüchen 1 bis 6, dadurch gekennzeichnet, daß als Flüssigkeiten zur Herstellung der feuchten Zubereitungsform des Blähgraphits Wasser oder Wasser enthaltende flüssige Gemische eingesetzt werden.

8. Verfahren nach Ansprüchen 1 bis 7, dadurch gekennzeichnet, daß man die feuchte Zubereitungsform des Blähgraphits in Formen auf Temperaturen zwischen 200 und 800°C erhitzt.

## Claims

1. Process for the production of mouldings from expandable graphite, characterised in that a liquid is added to expandable graphite and the resulting moist preparation form of the expandable graphite is heated in moulds to temperatures above 180°C, the amount of liquid to be used being chosen so that the expandable graphite no longer produces dust and is no longer completely free-flowing, and the total batch retains the liquid without signs of running.

2. Process according to Claim 1, characterised in that the expandable graphites used are NOₓ and/or SOₓ expandable graphites which are optionally pre-expanded.

3. Process according to Claims 1 and 2, characterised in that the expandable graphites are used together with oxidation stabilisers, pH standardising agents and/or binders.

4. Process according to Claims 1 to 3, characterised in that the expandable graphites are used as a mixture with perlites, vermiculites, expandable glasses, micas, clays, borosilicates, cokes, charcoals, hard coals, brown coals, graphite granules, cork granules, wood granules, cereal grains, cork, bark granules, expandable clay, foamed concrete, metal sponge, pumice, tuff and/or lava.

5. Process according to Claims 1 to 4, characterised in that expandable graphites are used as a mixture with additives, the amounts of additives being 0 to 85% by weight, relative to the mixture.

6. Process according to Claims 1 to 5, characterised in that the moist preparation form of the expandable graphite was produced from expandable graphite and water or from expandable graphite and aqueous solutions or dispersions of phosphates, polyphosphates and/or borates of metals, amines and/or ammonia, oxides, hydroxides, carboxylates, silicates of magnesium, calcium, aluminium, zinc, iron, sodium and/or potassium, coals, cokes, bituminous products of coal and/or oil refining, carbohydrates, proteins, thickeners and/or surfactants.

7. Process according to Claims 1 to 6, characterised in that water or water-containing liquid mixtures are used as liquids for the production of the moist preparation form of the expandable graphite.

8. Process according to Claims 1 to 7, characterised in that the moist preparation form of the expandable graphite is heated in moulds to temperatures of between 200 and 800°C.

## Revendications

1. Procédé de préparation de pièces moulées en graphite expansé, caractérisé en ce que l'on traite le graphite expansé par un liquide et que la préparation humide de graphite expansé ainsi obtenue est chauffée dans des moules à des températures dépassant 180°C, la quantité de liquide à utiliser étant choisie de façon que le graphite expansé ne dégage plus de poussière et ne puisse plus s'écouler sans limitation et que l'ensemble de la masse retienne le liquide sans phénomène d'exsudation.

2. Procédé selon la revendication 1, caractérisé en ce que le graphite expansé utilisé est un graphite expansé du type NOₓ et/ou SOₓ qui a éventuellement été pré-expansé.

3. Procédé selon les revendications 1 et 2, caractérisé en ce que les graphites expansés sont utilisés avec des stabilisants d'oxydation, des agents de réglage de la valeur du pH et/ou des liants.

4. Procédé selon les revendications 1 à 3, caractérisé en ce que les graphites expansés sont utilisés en mélange avec des perlites, des vermiculites, des verres expansibles, des micas, des argiles, des silicates de bore, des cokes, des charbons de bois, des houilles, des lignites, des granulés de graphite, des granulés de liège, des granulés de bois, des grains de céréales, du liège, des granulés d'écorces, de l'argile expansée, du béton cellulaire, des mousses métalliques, des pierres ponces, des tufs ou des laves.

5. Procédé selon les revendications 1 à 4, caractérisé en ce que les graphites expansés sont utilisés en mélanges avec des additifs, la teneur en additifs étant comprise entre 0 et 85% en poids rapportée au mélange.

6. Procédé selon les revendications 1 à 5, caractérisé en ce que le graphite expansé sous forme de préparation humide est préparé en utilisant du graphite expansé et de l'eau ou du graphite expansé et des solutions ou dispersions aqueuses de phosphates, de polyphosphates et/ou de borates de métaux, d'amines et/ou d'ammoniaque, d'oxydes, d'hydroxydes, de carboxylates, de silicates de magnésium, de calcium, d'aluminium, de zinc, de fer, de sodium et/ou de potassium, de houilles, de cokes, de produits bitumineux provenant du traitement des houilles et/ou du pétrole, des hydrates de carbone, des protéines, des agents épaississants et/ou des tensio-actifs.

7. Procédé selon les revendications 1 à 6, caractérisé en ce que l'on utilise comme liquides pour la préparation du graphite expansé sous forme de préparation humide, de l'eau ou des mélanges de liquides contenant de l'eau.

8. Procédé selon les revendications 1 à 7, caractérisé en ce que l'on chauffe le graphite expansé sous forme de préparation humide dans des moules, à des températures comprises entre 200 et 800°C.
